# EUROPEAN PATENT SPECIFICATION

(11) **EP 0 870 733 B1**
(45) Date of publication and mention of the grant of the patent: **18.06.2003**
(21) Application number: 98302827.5
(22) Date of filing: 09.04.1998
(51) Int. Cl.: C02F 7/00, C02F 1/74, F04F 5/24, F04F 5/44, B01F 5/04, B01F 3/04

(54) **Aerator for liquids**
Belüfter für Flüssigkeiten
Aérateur pour liquides

(30) Priority: 11.04.1997 GB 9707399; 30.01.1998 GB 9801877
(43) Date of publication of application: 14.10.1998
(73) Proprietor: Flucon Pumps Limited, St. Asaph, Denbighshire LL17 0RG (GB)
(72) Inventor: Edwards, Norman Alun Lindsay, St. Asaph, Denbigshire LL17 OBW (GB)
(74) Representative: Lyons, Andrew John

(56) References cited:
- DE-A- 2 447 337
- DE-A- 3 434 623
- US-A- 4 280 910
- US-A- 4 997 557

## Description

This invention concerns aerators.

Fishing lakes are prone to formation of algae therein. The algae removes oxygen from the water, so that the fish become lazy and do not eat. Chemical treatment is possible but this tends to sink the algae to the bottom of the lake, where oxygen is still absorbed eventually causing the fish to die. One answer to the problem of algae is to ensure that the lake is aerated although that may present practical problems. Thus, there is a need for a simple and effective aerator for use in fishing lakes.

Aerators may have applications in other situations. In particular, aeration of effluent or sewage is advantageous in enhancing biodegradation thereof. Paddles are presently used for aeration of sewage but are heavy on energy consumption. Additionally, the gear boxes of such paddles frequently breakdown and are expensive to repair.

DE 24 47 337 discloses an aerator for a liquid medium utilising a venturi system, having a liquid inlet, a liquid outlet, and an air inlet and a means of keeping the aerator afloat in the liquid medium.

An object of this invention is to provide an aerator for use in a liquid medium, including solids in suspension.

According to this invention there is provided an aerator for use in a liquid medium comprising a substantially horizontal liquid inlet to a venturi chamber, pump means for drawing liquid through the venturi chamber, an air inlet connected to the venturi chamber, whereby air is drawn into and aerates the liquid drawn through the venturi chamber, an outlet from the venturi chamber for discharging the aerated liquid into the liquid medium in a substantially horizontal direction and float means for supporting the aerator in the liquid medium, the aerator being characterised by the liquid inlet being movable between two positions, one where the liquid inlet takes in liquid in an opposite direction to outlet flow, and the other where the liquid is drawn in and discharged in the same direction, the liquid inlet and outlet being on parallel axes.

When suction and discharge of liquid are in opposite directions, the aerator is generally stabilised. In other words pull on securing means, such as anchor chain, is minimised.

Alternatively, in a second position the inlet is arranged so that liquid is drawn into and discharged from the aerator in the same direction. With the inlet in the second position liquid movement through the aerator may be maximised. The liquid inlet and outlet are preferably of substantially the same cross-sectional area.

The air inlet is preferably a pipe or tube on which the float means may be mounted. For some, typically small scale, aerators it may be convenient to have a float chamber slidably mounted on the inlet tube or pipe.

Means may be provided on the inlet or the float chamber to restrict the depth of the aerator in the liquid medium relative to the float chamber.

For other, especially larger scale, aerators it may be more desirable to have the inlet pipe or tube fixed relative to the float means. In such a situation it may be convenient to have the float means clamped to the inlet tube or pipe. The float means may comprise one or more preferably two, hulls coupled together.

The liquid inlet is preferably below the outlet.

The pump is preferably in a casing, so that liquid preferably flows into the pump only via the inlet. The pump means is preferably electrically operated. The power output of the pump will be chosen according to the intended use of the aerator. Typically for aerating a fishing lake, a 0.75kw pump may be suitable. For aeration of, for example, sewage a larger capacity pump, such as a 6kw pump, may be necessary. However, even larger capacity pumps, for example up to 60kw may be used for heavier applications.

Control means is preferably provided for the pump means, preferably so that the pump can be controlled remotely. By controlling the speed of the pump the amount of oxygen being introduced into the liquid can be regulated. Preferably the control means is responsive to sensors for determining the biological oxygen demand (BOD) and the chemical oxygen demand (COD) of the liquid medium.

The venturi chamber preferably comprises a flow restriction tube from the liquid medium inlet. The flow restriction tube may have converging sides along its entire length or may terminate with a parallel sided section. Typically a flow restriction tube comprises a hollow frusto-conical section. The air inlet preferably connects with the venturi chamber partially behind the flow restriction tube outlet end.

The aerator of the invention operates by pumping liquid through the venturi chamber, where flow restriction causes a pressure reduction that draws air into the chamber through the air inlet where it mixes with and aerates the liquid.

Another use for aerators of the invention is in the degassing and reoxygenation of liquids. Again this involves directing output upwardly so that gases entrained in the liquid output can escape to atmosphere from the liquid spray produced.

To facilitate degassing using an aerator of the invention, it is preferred that the aerator of the invention be tiltable relative to the float means whereby the outlet from the aerator may be upwardly directed. Preferably the aerator is connected to the float means by a mechanism allowing the aerator to be tilted to a selectable angle.

It is believed that aerators of the invention can provide considerable energy savings compared to currently used aeration systems. For example, aeration of sewage using paddles typically requires 40kw motors to drive the paddles. However, comparable aeration of sewage may be achieved using three aerators of the invention each using only a 6kw motor.

This invention will now be further described, by way of example only, with reference to the accompanying drawings, in which:
Figure 1 shows a horizontal aerator typically for use in aerating fish pools;
Figure 2 is a view from one end of the aerator of Figure 1;
Figure 3 is a view from the other end of the aerator of Figure 1;
Figure 4 is a side view of the aerator of Figure 1;
Figure 5 is a plan view of the aerator of Figure 1;
Figure 6 is an enlarged part-sectioned view of part of the aerator of Figure 1;
Figure 7 is a front view of a sewage aerator of the invention;
Figure 8 is a side view of float means for the aerator of Figure 7;
Figure 9 is a plan view of float means of the aerator of Figure 7;
Figure 10 shows the aerator of Figure 7 without the float means;
Figure 11 is an enlarged part-sectioned view of the aerator of Figure 7;
Figure 12 shows a tilted aerator for use in de-gassing, aerating and cooling fish pools;
Figure 13 is a side view of a tiltable aerator;
Figure 14 is a plan view of the aerator of Figure 13;
Figure 15 is a partial end view of the aerator of Figure 13;
Figure 16 is a side view of a suction diverter for aerators of the invention in one position;
Figure 17 shows the suction diverter in another position;
Figure 18 is a plan view of another aerator according to the invention;
Figure 19 is a side view of part of the inlet/outlet for the aerator of Figure 18;
Figure 20 is an end view of the inlet/outlet of Figure 19;
Figure 21 is a plan view of a heavy duty aerator according to the invention; and
Figure 22 is a side view of the aerator of Figure 21.

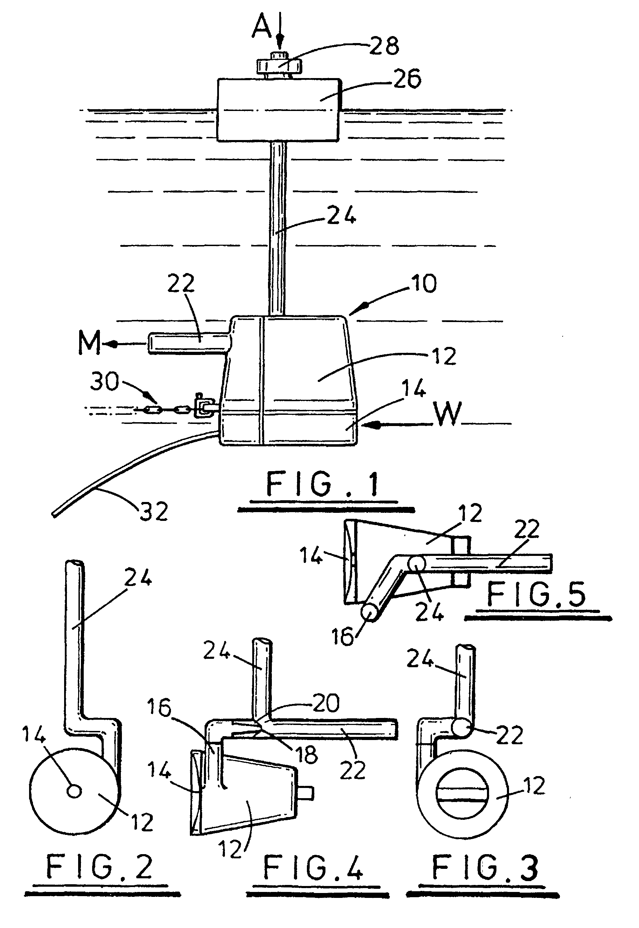

Referring to Figures 1 to 6 of the accompanying drawings, an aerator 10 for use, for example, in aerating fishing pools comprises a pump chamber 12 containing an electrically operated pump and having a liquid inlet 14 and an outlet 16. The pump may be battery operated or a water tight electrical cable connection 32 may be made to an on-shore power supply. Typically the pump will be a 0.75kw pump. The outlet 16 is connected to a venturi chamber 18 containing a flow restriction tube 20 which narrows over its length. The flow restriction tube 20 leads to an outlet 22. An air inlet 24 is connected to the venturi chamber partially in front of and behind the flow restriction tube outlet end. The air inlet is in the form of a tube about which is slidably mounted a float chamber 26. Above the float chamber 26 on the air inlet pipe is a locking collar 28, which can be used to limit the height of the float chamber relative to the air inlet pipe.

A chain 30 is attached to the pump chamber so that it can be attached to an anchor or to shore.

The aerator 10 may be used in the following manner. Having determined the depth at which the water inlet is to be situated, the locking collar is positioned on the air inlet pipe so that the float chamber which acts upwards on the locking collar will hold the pump chamber at the desired depth. The electrical pump is switched on and this draws water through the inlet in the direction of arrow W, through the pump and into the venturi chamber before exiting through the outlet in the direction of arrow M. In the venturi chamber, the flow restriction carries a pressure drop which sucks air down the air inlet tube in the direction of arrow A into the venturi chamber where it mixes with the water to aerate it, so that the air is entrained in the water leaving the outlet.

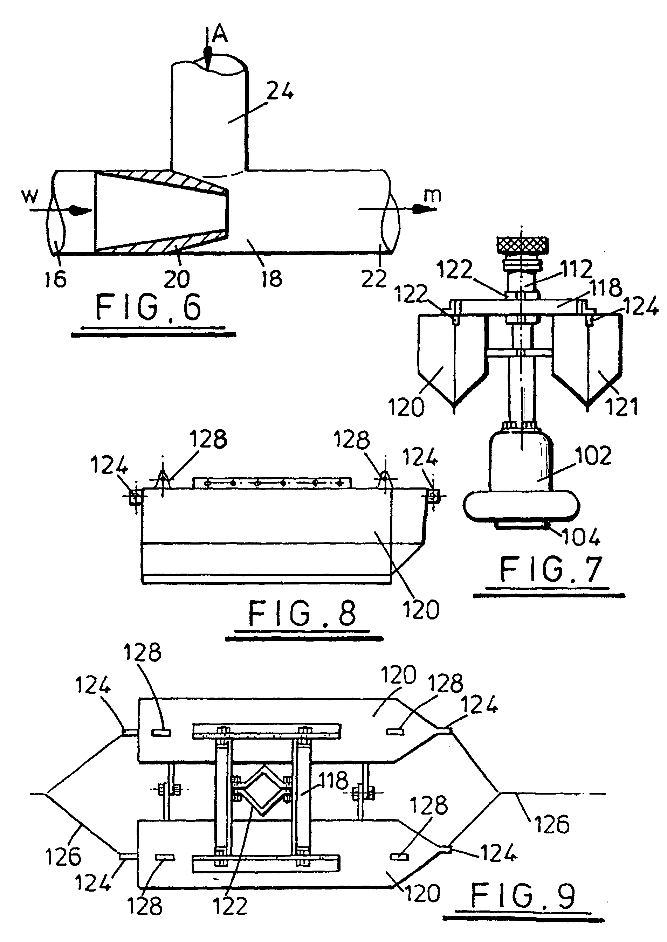

Turning to Figures 7 to 11 of the accompanying drawings, an aerator 100 is shown which is designed for heavier duty purposes such as aeration of sewage. The aerator 100 comprises a pump chamber 102 containing an electrically operated 6kw pump and having a liquid inlet 104 through the base of the chamber. The pump is connected to a venturi chamber 106 which includes a flow restriction tube 108 leading to an outlet tube 110. Connected to the venturi chamber is an air inlet tube 112 extending upwardly. The flow restriction tube 108 has a first section frusto-conical section 114 and a second cylindrical outlet section 116.

The air inlet tube 112 is fitted to a framework 118 between a pair of floating hulls 120. The framework 118 includes a square section releasable clamp 122 that locates around a square section part of the inlet tube 112, so that same does not rotate due to the action of the pump,. The clamp 122 allows the pump chamber to be positioned at a desirable depth relative to the floating hulls.

The floating hulls 120 have brackets 124 front and back, so that they can be pulled into position and anchored to shore by cables 126. The hulls 120 also have lugs 128 on their top decks 130, to which lifting cables can be attached, so that the aerator can be lifted and lowered into position.

The aerator 100 is operated in a similar manner to the aerator 10 except that it is designed to use a more powerful pump rendering it more suitable for heavier liquids than water, such as sewage.

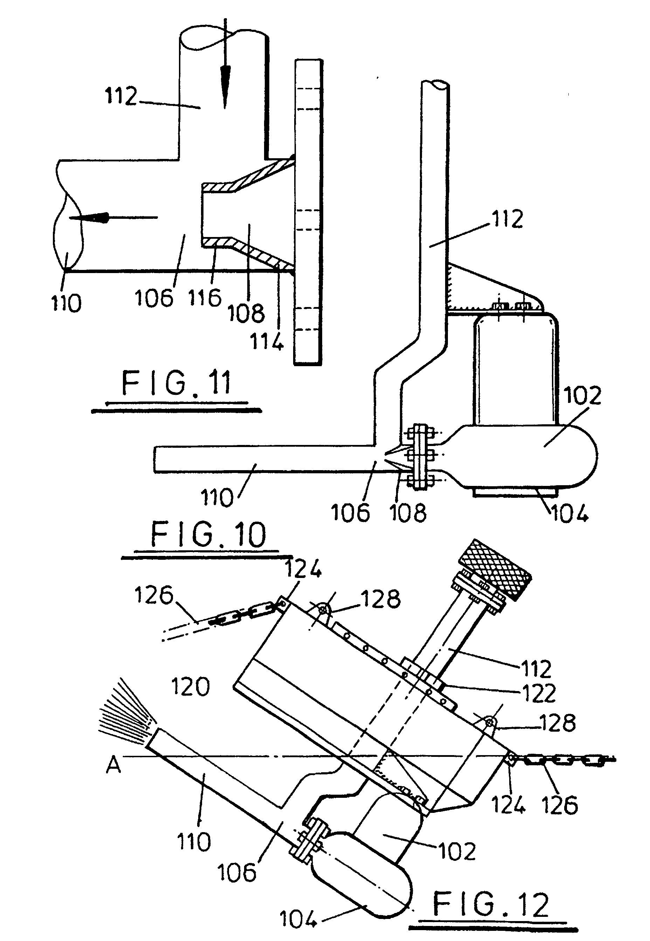

Figure 12 illustrates an aerator as hereinbefore described in relation to Figures 7 to 11 of the accompanying drawings, to effect de-gassing, aeration and cooling of the water. The features of the aerator have already been described and are given the identical reference numbers for simplicity. The aerator is tilted upwards such that the outlet tube 110 extends out of the water (the water level is represented by the line A-A in Figure 12) and is kept in the tilted position by means of the floating hulls 120 and cables 126.

The tilted aerator allows water which is sucked in through the liquid inlet 104 to be sprayed out of the outlet tube 110 in the form of a fountain. This results in gases such as methane and carbon dioxide being expelled from the water. Additionally, the water gets a secondary aeration due to air being taken in as the water travels through the atmosphere.

Furthermore, the water temperature is lowered as the water is sprayed through the air resulting in a cooling of the pond or pool. This is particularly advantageous for use in the pools of fish farms during hot summer months when the increased temperature of the water often results in the death of a large number of fish.

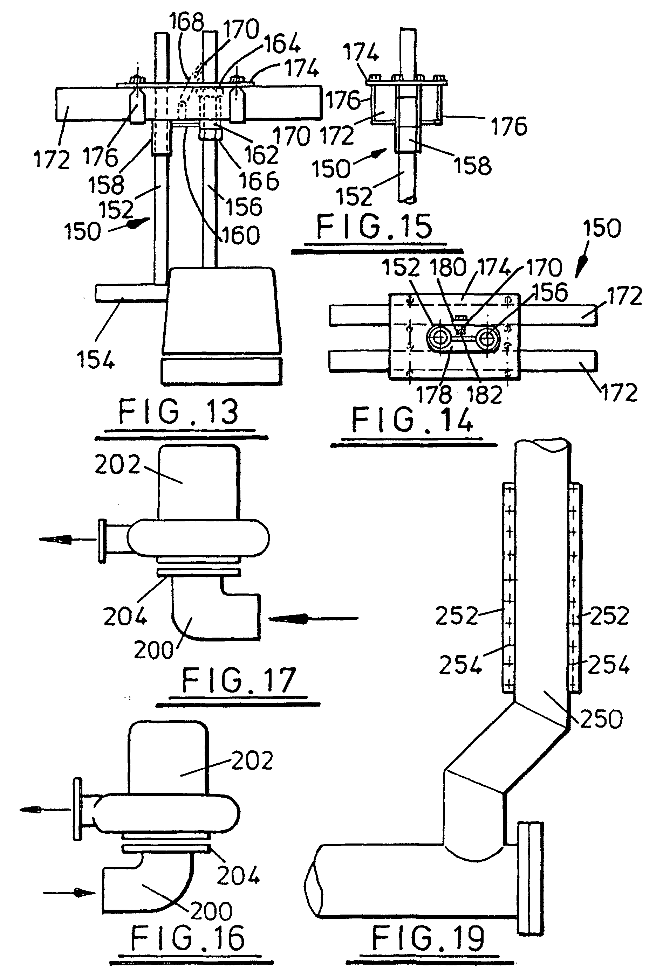

Referring to Figures 13 to 15 a tiltable aerator 150 is shown that is generally similar to that of Figures 1 to 6 save for its floating/tilting arrangements which only will be described in detail. A support tube 152 is mounted on outlet 154 parallel to air inlet 156. The support tube 152 has a slidable collar 158 thereon connected by a bar 160 to a slidable collar 162 on the air inlet. The collar 162 can be fixed at a desired height on the air inlet by locking rings 164, 166 above and below the collar. Extending upwardly from the bar 160 is a curved bar 168 having a series of holes 170 therethrough.

A pair of generally rectangular floats 172 are mounted under a plate 174 by means of straps 176. The plate 174 has a central aperture 178 to enable it to fit over the inlet 156 and support tube 152. At one side of the aperture 178 is mounted a bracket 180 with a hole through it. The bracket 180 is positioned so that its hole and a hole of the bar 168 can be aligned and be fixed together by a nut and bolt 182. Because the bar 168 is curved and has a series of spaced through holes, float plate can be tilted to a desired angle relative to the air inlet and fixed at that angle by aligning the bracket hole with the appropriate hole of the bar 168 and fastening then together with the nut and bolt.

For aeration the floats will usually be parallel to the outlet of the aerator but for degassing or cooling purposes it is useful to have the floats angled to the outlet, so that the outlet is directed generally upwardly.

Turning to Figures 16 and 17 of the drawings, in previously described embodiments of the invention liquid intake has been generally upwardly into the pump chamber. However, for same purposes and indeed generally it may be useful for liquid intake to be parallel to liquid discharge. Therefore, a suction deflector 200 can be affixed to the underside of pump chamber 202. The deflector is a generally L-shaped inlet tube having a mounting ring 204 whereby it can be mounted to take in water in the opposite direction to the discharge direction from the outlet. That arrangement is advantageous for stability of the aerator and reduces pull on anchoring means for the aerator.

On the other hand, the deflector 200 can be turned through 180° to take liquid in the same direction as the liquid is discharged from the outlet. Such an arrangement may be useful for increasing liquid movement through the aerator.

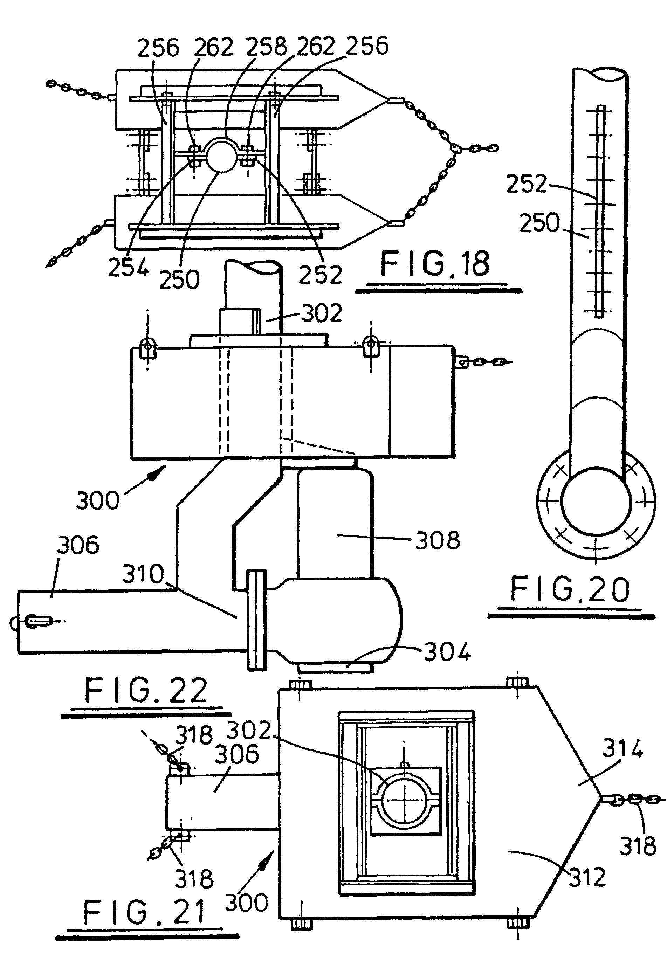

Figures 18 to 20 illustrate an alternative way of fixing the air inlet pipe to the floats compared to the way shown in Fiugre 9. In this alternative , the air inlet pipe 250 is of circular section and has a pair of mounted flanges 252 on opposite sides of the pipe 250. Each flange 252 has a series of spaced holes 254 for fixing bolts.

Mounted between framework components 256 is a bracket 258 shaped to receive the circular section air inlet pipe. The bracket 258 has two pairs of bolt holes 260 for alignment with pairs of holes of the flanges 252 according to the desired height for the floats relative to the pump. Then the air inlet pipe is fixed to the bracket by nuts and bolts 262.

Finally, Figures 21 and 22 illustrate a large scale aerator 300 according to the invention. The aerator 300 has the usual air inlet 302, liquid inlet 304, liquid outlet 306, pump chamber 308 and venturi chamber 310. Float means 312 actually surround the air inlet 302 and have a prow 314. Anchoring of the float is via anchor chains 318 connected to the prow 314 and to the liquid outlet 306.

The aerator of the present invention has a wide range of applications throughout all industries. The aerator may be used for aerating fluids, de-gasing fluids, cooling fluids, and can handle solids in suspension depending upon the pump venturi design employed. The aerator can be used to keep solids in suspension rather than allowing the solids to settle on the bottom of the pool resulting in faster degradation thereof.

The aerator is cheap and easy to install requiring no special civil engineering preparation. Furthermore, the aerator can be easily removed from one expanse of water and installed elsewhere.

## Claims

1. An aerator (10) for use in a liquid medium comprising a substantially horizontal liquid inlet (200) to a venturi chamber, (18), pump means for drawing liquid through the venturi chamber, (18), an air inlet (24) connected to the venturi chamber (18), whereby air is drawn into and aerates the liquid drawn through the venturi chamber (18), an outlet (22) from the venturi chamber (18) for discharging the aerated liquid into the liquid medium in a substantially horizontal direction and float means (26) for supporting the aerator (10) in the liquid medium, the aerator (10) being **characterised by** the liquid inlet (200) being movable between two positions, one where the liquid inlet (200) takes in liquid in an opposite direction to outlet flow, and the other where the liquid is drawn in and discharged in the same direction, the liquid inlet (200) and liquid outlet (22) being on parallel axes.

2. An aerator (10) as claimed in claim 1, wherein the liquid inlet (14) and outlet (22) are of substantially the same cross-sectional area.

3. An aerator (10) as claimed in claim 1 or 2, wherein the air inlet (24) is a pipe on which the float means (26) is mounted.

4. An aerator (10) as claimed in claim 3, wherein the float chamber (26) is slidably mounted on the air inlet (24).

5. An aerator (10) as claimed in claim 4 having means (28) on the air inlet (24) for restricting depth of the aerator (10) in the liquid medium relative to the float chamber (26).

6. An aerator (100) as claimed in claim 1, 2 or 3, wherein the float means is clamped to the air inlet (112).

7. An aerator (100) as claimed in claim 6, wherein the float means comprises two hulls (120) coupled together.

8. An aerator (10) as claimed in any one of claims 1 to 7, wherein the liquid inlet (14) is below the outlet (22).

9. An aerator (10) as claimed in any one of claims 1 to 8, wherein the pump is in a casing (12), so that liquid enters the pump only via the inlet (14).

10. An aerator (10) as claimed in any one of claims 1 to 9, further comprising means for controlling speed of the pump.

11. An aerator (10) as claimed in claim 10, wherein the control means is responsive to sensors for determining biological oxygen demand and chemical oxygen demand of the liquid medium.

12. An aerator (100) as claimed in any one of claims 1 to 11, wherein the venturi chamber (106) comprises a flow restriction tube (108) from the liquid medium inlet (104).

13. An aerator (100) as claimed in claim 12, wherein the air inlet (112) connects with the venturi chamber (106) partially behind the flow restriction tube outlet end (110).

14. An aerator (150) as claimed in any one of claims 1 to 13, wherein the aerator (150) is tiltable relative to the float means (172).

## Patentansprüche

1. Belüftungsvorrichtung (10) zur Verwendung in einem flüssigen Medium, umfassend einen im Wesentlichen horizontalen Flüssigkeitseinlass (200) in eine Venturikammer (18), Pumpmittel, um Flüssigkeit durch die Venturikammer (18) zu ziehen, einen Lufteinlass (24), der mit der Venturikammer (18) verbunden ist, wobei Luft in die durch die Venturikammer (18) gezogene Flüssigkeit gezogen wird und die Flüssigkeit belüftet, einen Auslass (22) aus der Venturikammer (18), um die belüftete Flüssigkeit in einer im Wesentlichen horizontalen Richtung in das flüssige Medium abzulassen, und Schwimmmittel (26), um die Belüftungsvorrichtung (10) im flüssigen Medium zu tragen, wobei die Belüftungsvorrichtung (10) **dadurch gekennzeichnet ist, dass** der Flüssigkeitseinlass (200) zwischen zwei Positionen beweglich ist, einer, bei welcher der Flüssigkeitseinlass (200) in einer dem Auslassfluss entgegengesetzten Richtung Flüssigkeit aufnimmt, und der anderen, bei welcher Flüssigkeit in der gleichen Richtung eingesaugt und abgelassen wird, wobei der Flüssigkeitseinlass (200) und der Flüssigkeitsauslass (22) sich auf parallelen Achsen befinden.

2. Belüftungsvorrichtung (10) gemäß Anspruch 1, worin der Flüssigkeitseinlass (14) und Auslass (22) im Wesentlichen die gleiche Querschnittsfläche aufweisen.

3. Belüftungsvorrichtung (10) gemäß Anspruch 1 oder 2, worin der Lufteinlass (24) eine Leitung ist, an der das Schwimmmittel (26) befestigt ist.

4. Belüftungsvorrichtung (10) gemäß Anspruch 3, worin das Schwimmmittel (26) gleitbar am Lufteinlass (24) befestigt ist.

5. Belüftungsvorrichtung (10) gemäß Anspruch 4 mit Mitteln (28) am Lufteinlass (24), um die Tiefe der Belüftungsvorrichtung (10) im flüssigen Medium relativ zur Schwimmkammer (26) zu beschränken.

6. Belüftungsvorrichtung (100) gemäß Anspruch 1, 2 oder 3, worin das Schwimmmittel an den Lufteinlass (112) geklemmt ist.

7. Belüftungsvorrichtung (100) gemäß Anspruch 6, worin das Schwimmmittel zwei gekoppelte Rümpfe (120) umfasst.

8. Belüftungsvorrichtung (10) gemäß irgendeinem der Ansprüche 1 bis 7, worin der Flüssigkeitseinlass (14) sich unterhalb des Auslasses (22) befindet.

9. Belüftungsvorrichtung (10) gemäß irgendeinem der Ansprüche 1 bis 8, worin die Pumpe sich in einem Gehäuse (12) befindet, so dass Flüssigkeit in die Pumpe nur durch den Einlass (14) gelangt.

10. Belüftungsvorrichtung (10) gemäß irgendeinem der Ansprüche 1 bis 9, welche weiter Mittel zur Regelung der Pumpengeschwindigkeit umfasst.

11. Belüftungsvorrichtung (10) gemäß Anspruch 10, worin das Regelmittel auf Sensoren anspricht, die den biologischen Sauerstoffbedarf und den chemischen Sauerstoffbedarf des flüssigen Mediums ermitteln.

12. Belüftungsvorrichtung (100) gemäß irgendeinem der Ansprüche 1 bis 11, worin die Venturikammer (106) ein Fließbegrenzungsrohr (108) vom Einlass für flüssiges Medium (104) umfasst.

13. Belüftungsvorrichtung (100) gemäß Anspruch 12, worin der Lufteinlass (112) an die Venturikammer (106) teilweise hinter dem Fließbegrenzungsrohr-Auslassende anschließt.

14. Belüftungsvorrichtung (150) gemäß irgendeinem der Ansprüche 1 bis 13, worin die Belüftungsvorrichtung (150) bezüglich des Schwimmmittels (172) kippbar ist.

## Revendications

1. Aérateur (10) à utiliser dans un milieu liquide, comprenant une entrée de liquide (200) essentiellement horizontale, menant à une chambre de venturi (18), des moyens formant pompe pour aspirer le liquide à travers la chambre de venturi (18), un entrée d'air (24) connectée à la chambre de venturi (18), par laquelle de l'air est aspiré et aère le liquide aspiré à travers la chambre de venturi (18), une sortie (22) émanant de la chambre de venturi (18) pour décharger le liquide aéré dans le milieu liquide, dans une direction essentiellement horizontale, et des moyens flotteurs (26) pour supporter l'aérateur (10) dans le milieu liquide, l'aérateur (10) étant **caractérisé par le fait que** l'entrée de liquide (200) est mobile entre deux positions, une position dans laquelle l'entrée de liquide (200) prend dans le liquide une direction opposée à l'écoulement de sortie, et l'autre position, dans laquelle le liquide est aspiré et déchargé dans la même direction, l'entrée de liquide (200) et la sortie de liquide (22) étant situées sur des axes parallèles.

2. Aérateur (10) selon la revendication 1, dans lequel l'entrée dé liquide (14) et la sortie (22) ont essentiellement la même aire en section transversale.

3. Aérateur (10) selon la revendication 1 ou 2, dans lequel l'entrée d'air (24) est un tuyau sur lequel sont montés les moyens flotteurs (26).

4. Aérateur (10) selon la revendication 3, dans lequel la chambre de flottement (26) est montée coulissante sur l'entrée d'air (24).

5. Aérateur (10) selon la revendication 4, ayant, sur l'entrée d'air (24), des moyens (28) servant à diminuer la profondeur de l'aérateur (10) dans le milieu liquide par rapport à la chambre de flottement (26).

6. Aérateur (100) selon la revendication 1, 2 ou 3, dans lequel les moyens flotteurs sont fixés sur l'entrée d'air (112).

7. Aérateur (100) selon la revendication 6, dans lequel les moyens flotteurs comprennent deux coques (120) couplées l'une à l'autre.

8. Aérateur (10) selon l'une quelconque des revendications 1 à 7, dans lequel l'entrée de liquide (14) est située en dessous de la sortie (22).

9. Aérateur (10) selon l'une quelconque des revendications 1 à 8, dans lequel la pompe est située dans un carter (12), de sorte que le liquide entre dans la pompe uniquement par l'entrée (14).

10. Aérateur (10) selon l'une quelconque des revendications 1 à 9, comprenant, en outre, des moyens servant à réguler la vitesse de la pompe.

11. Aérateur (10) selon la revendication 10, dans lequel les moyens de régulation agissent en réponse à des capteurs servant à déterminer la demande biologique d'oxygène et la demande chimique d'oxygène du milieu liquide.

12. Aérateur (100) selon l'une quelconque des revendication 1 à 11, dans lequel la chambre de venturi (106) comprend une tube de restriction d'écoulement (108) partant de l'entrée de milieu liquide (104).

13. Aérateur (100) selon la revendication 12, dans lequel l'entrée d'air (112) se raccorde à la chambre de venturi (106), partiellement derrière l'extrémité de sortie (110) du tube de restriction d'écoulement.

14. Aérateur (150) selon l'une quelconque des revendications 1 à 13, dans lequel l'aérateur (150) peut être basculé par rapport aux moyens flotteurs (172).
